Europäisches Patentamt

European Patent Office

Office européen des brevets

(19)

(11) **EP 1 285 528 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(21) Anmeldenummer: **01942996.8**

(22) Anmeldetag: **02.05.2001**

(51) Int Cl.⁷: **H04N 1/405**, H04N 1/40

(86) Internationale Anmeldenummer:
**PCT/DE2001/001646**

(87) Internationale Veröffentlichungsnummer:
**WO 2001/086942 (15.11.2001 Gazette 2001/46)**

(54) **Mehrtonstufen-Rasterung mit Rastern beliebiger Rasterweiten und Rasterwinkel**

Multiple tone level rasterization with rasters screens of any width and angle

Tramage à teintes multiples utilisant des trames de linéature et d'inclinaison quelconques

(84) Benannte Vertragsstaaten:
**DE FR GB IT**

(30) Priorität: **08.05.2000 DE 10022225**

(43) Veröffentlichungstag der Anmeldung:
**26.02.2003 Patentblatt 2003/09**

(73) Patentinhaber: **Heidelberger Druckmaschinen Aktiengesellschaft**
**69115 Heidelberg (DE)**

(72) Erfinder:
• WADLE, Heinrich
  24536 Nemünster (DE)
• LUDO, Kerz
  55268 Nieder-Olm (DE)

(56) Entgegenhaltungen:
EP-A- 0 740 459          WO-A-90/06033
WO-A-93/26116          DE-A- 19 722 697
GB-A- 2 026 283          US-A- 4 447 833
US-A- 4 985 779          US-A- 5 353 128

EP 1 285 528 B1

**Beschreibung**

Die Erfindung bezieht sich auf das Gebiet der elektronischen Reproduktionstechnik und betrifft ein Verfahren zur Herstellung von gerasterten Bildern mit Rastern beliebiger Rasterweiten und Rasterwinkel.

Bei den meisten Druckverfahren können nur wenige Druckwertabstufungen gedruckt werden. Viele Druckverfahren können sogar nur zwei Druckwerte wiedergeben, d.h. entweder wird Farbe auf den Bedruckstoff aufgebracht oder nicht. Andere Druckverfahren können nur wenige grob abgestufte Druckwerte wiedergeben, z.B. nur 16 Druckwerte. Zur Simulation einer feinstufigen Tonwertskala im Druckergebnis, die das Auge als kontinuierlich empfindet, werden daher gitterförmig angeordnete Rasterpunkte nebeneinander gedruckt. Durch Variation der Größe der Rasterpunkte entsteht optisch ein hellerer oder dunklerer Tonwert. Der Abstand der Rasterpunkte zueinander wird als Rasterweite und der Winkel des Rasterpunktgitters zur x-Achse als Rasterwinkel bezeichnet. Für den Vierfarbendruck mit den Druckfarben Cyan, Magenta, Gelb und Schwarz (CMYK) wird zur Minimierung von Moiré-Mustern üblicherweise mit vier Rastern gleicher Rasterweite und den Rasterwinkeln 0, 15, 45 und 75 Grad gearbeitet. Bereits minimale Abweichungen hiervon verursachen Moiré und damit schlechte oder unbrauchbare Bildreproduktionen.

Die Rasterung wird bei der Herstellung von Druckvorlagen eingesetzt, d.h. bei der Belichtung von Farbseparationsfilmen oder bei der direkten Belichtung von Druckplatten, oder auch in einem Schwarzweiß- oder Farbdrucker, dessen Auflösung genügend groß ist, um Rasterpunkte mit variierender Größe drucken zu können. Die gerasterten Druckvorlagen werden nach dem Stand der Technik mit digital arbeitenden Belichtern erzeugt. Diese benutzen eine Lichtquelle um eine lichtempfindliche Fläche zu belichten, z.B. einen Film oder eine Druckplatte. Diese Lichtquelle kann in x- und y-Richtung schrittweise relativ zur Druckvorlage verfahren und gezielt ein - und ausgeschaltet werden. Hierbei ergeben sich kleine Flächenelemente, auch "Device Pixel" genannt, die je nach Steuerung der Lichtquelle einzeln belichtet werden können oder nicht. Rasterpunkte werden bei diesen digitalen Belichtern aus einer Vielzahl von Device Pixeln aufgebaut. In einer vorgeschalteten Rechnereinheit, auch RIP (Raster Image Processor) genannt, wird jedes Device Pixel durch ein Bit in einem Speicher dargestellt. Die Gesamtheit dieser Bits wird als Bitmap bezeichnet und ist ein digitales Abbild der Device Pixel.

In der Vergangenheit sind eine Reihe von Verfahren zur digitalen Rasterung bekannt geworden, die sich in 3 Gruppen einteilen lassen, sogenannte irrationale Rasterverfahren (nachfolgend IS, IS-Verfahren oder IS-Technik genannt), sogenannte rationale Rasterverfahren (nachfolgend RT, RT-Verfahren oder RT-Technik genannt) und frequenzmodulierte Rasterverfahren. Die Namengebung erklärt sich aus der Tatsache, daß bei den irrationalen Rasterverfahren Rasterwinkel mit einem irrationalen Tangens und bei den rationalen Rasterverfahren Rasterwinkel mit einem rationalen Tangens verwendet werden. Ein irrationales Rasterverfahren ist beispielsweise in der deutschen Patentschrift DE-28 27 596 C2 und rationale Rasterverfahren sind in der deutschen Patentschrift DE - 28 27 596 C2 und in der europäischen Patentschrift EP-0 539 397 B1 beschrieben.

Diesen beiden Rasterverfahren ist gemeinsam, daß ein digitales Abbild der Rasterpunkte im Speicher des RIP existiert, das auch "Schwellwertgebirge" oder Schwellwertmatrix genannt wird. In diesem Zusammenhang wird auch der Begriff "Schwellwertspeicher" verwendet. Dieses Abbild besteht aus einer Gruppe von Zahlenwerten, den sogenannten Schwellwerten. Zur Erzeugung der digitalen Druckvorlagen, auch Rastervorgang oder Rasterung genannt, wird für jedes Device Pixel nach einer vom Rasterverfahren abhängigen Vorschrift ein Schwellwert aus dem Schwellwertgebirge ausgewählt und mit einem dem Device Pixel zugeordneten digitalen Farbtonsignal, das üblicherweise durch Abtastung einer Vorlage gewonnen wird oder aus einem Speicher ausgelesen wird, verglichen und in Abhängigkeit von diesem Vergleich wird das betreffende Bit in der Bitmap gesetzt oder nicht und damit auch das zugehörige Device Pixel des Belichters geschwärzt oder nicht. Der Vorgang der Bestimmung des Schwellwertes, der einem Device Pixel zugeordnet ist, wird auch Schwellwertzugriff genannt.

Bei den IS-Verfahren besteht der Schwellwertspeicher aus dem digitalen Abbild eines einzigen Rasterpunktes, der unter einem Winkel von 0 Grad abgelegt ist. Bei der Rasterung muß für jeden Schwellwertzugriff ein komplexer Rechenvorgang für jedes Device Pixel durchgeführt werden. Hierbei müssen sowohl die Rasterweite als auch der Rasterwinkel, nachfolgend auch nur als Raster bezeichnet, berücksichtigt werden.

Bei den RT-Verfahren besteht der Schwellwertspeicher aus dem digitalen Abbild eines oder mehrerer Rasterpunkte. Bei der Ablage der Schwellwerte im Speicher werden Rasterweite und Rasterwinkel bereits berücksichtigt und die Schwellwerte im Speicher so organisiert, daß die Schwellwerte benachbarter Device Pixel auch im Schwellwertspeicher benachbart sind. Der Rechenvorgang bei einem Schwellwertzugriff reduziert sich damit im wesentlichen zu einer Adressenfortschaltung.

Beide Verfahren haben eine völlig andere technische Realisierung was den Verfahrensablauf zur Erzeugung der Raster betrifft. Andererseits haben beide Verfahren verschiedene technische Vor- und Nachteile, weshalb mal das eine und mal das andere Rasterverfahren in der Praxis favorisiert wird. Da bei den IS-Verfahren nur ein einziger Rasterpunkt im Schwellwertspeicher abgelegt wird, besteht ein weitaus geringerer Speicherplatzbedarf. Ferner erlaubt der Rechenvorgang zur Auswahl der Schwellwerte die exakte Realisierung aller Raster, insbesondere auch der für den Farbdruck wichtigen irrationalen Winkel 15 und 75 Grad. Die RT-Verfahren können dagegen die geforderten Rasterwinkel nur mit Werten annähern, die sich durch einen rationalen Tangens beschreiben lassen, wobei der Schwellwertspeicherplatzbedarf etwa quadratisch zur Genauigkeit wächst. Der Vorteil der RT-Verfahren besteht darin, daß der Rastervorgang sich sowohl in Hardware als auch in Software mit geringerem Aufwand und besserer Leistungsfähigkeit realisieren läßt, wobei bei einer Realisierung in Software die IS-Verfahren besonders schlecht abschneiden. Dies gilt insbesondere, wenn große Flächen mit einem einheitlichen Flächendeckungsgrad zu rastern sind. Hier kann für die RT-Verfahren ein dem Flächendeckungsgrad entsprechendes Bitmuster vorab erzeugt werden, das dann nur noch kopiert werden muß. Dagegen ist für das IS-Verfahren prinzipiell für jedes zu rasternde Device Pixel der zugehörige Schwellwertzugriff separat zu berechnen. Ferner ist es bei den RT-Verfahren nicht erforderlich Rauschen zuzusetzen. Rauschen wird bei den IS-Verfahren in der Regel zugesetzt um Störmuster, die bei diesem Verfahren entstehen, zu verdecken. Dies führt in der Praxis zu Rasterpunkten mit zerrissenen Kanten, die sich drucktechnisch nachteilig auswirken. Darüber hinaus äußert sich das Rauschen in großen Flächen mit konstanter Flächendeckung in Form einer optischen Unruhe des reproduzierten Bildes.

In der Patentschrift US 5,315,407 wird eine Verbesserung des IS-Verfahrens beschrieben, mit der die Unruhe, die durch die etwas unterschiedliche Form benachbarter Rasterpunkte erzeugt wird, reduziert werden soll. Dazu werden die Koordinaten zur Adressierung der Schwellwertmatrix so modifiziert, daß der Mittelpunkt jedes Rasterpunkts auf das jeweils nächstliegende Device Pixel verschoben wird. Dadurch erhalten die Rasterpunkte eine gleichmäßigere Form. Auch dieses Verfahren weist aber den grundsätzlichen Nachteil des IS-Verfahrens auf, daß für jedes zu rasternde Device Pixel eine komplexe Berechnung der Adressen für den Schwellwertzugriff durchzuführen ist.

In der deutschen Offenlegungsschrift DE 197 22 697 A1 wird eine Rasterung beschrieben, die die Vorteile des IS-Verfahrens und des RT-Verfahrens miteinander verbindet. Dazu wird eine Schwellwertmatrix verwendet, in der die Schwellwerte einen oder mehrere Rasterpunkte eines gegebenen RT-Rasters, repräsentieren, mit dem die Rasterweite und der Rasterwinkel eines gewünschten IS-Rasters angenähert werden. Während des Auslesens der Schwellwerte wird ein Fehler zwischen den Koordinaten des gewünschten IS-Rasters und des gegebenen RT-Rasters ermittelt, und der Fehler wird durch eine Korrektur der Ausleseadresse für die Schwellwertmatrix kompensiert, sobald der Fehler einen vorgegebenen Grenzwert überschreitet. Auf diese Weise entsteht das gewünschte IS-Raster, ohne daß wie beim üblichen IS-Verfahren die komplexen und zeitaufwendigen Berechnungen der Schwellwertmatrixadresse durchgeführt werden müssen. Alternativ können anstelle der Schwellwertmatrix gespeicherte Bitmuster verwendet werden, die durch Vergleichen der zu reproduzierenden Farbtonwerte mit einer Schwellwertmatrix gewonnen wurden.

Das in der deutschen Offenlegungsschrift DE 197 22 697 A1 beschriebene kombinierte IS/RT-Verfahren wird dort für die Erzeugung einer gerasterten Reproduktion mit nur zwei Druckwerten beschrieben, also für den Fall, daß jedes Device Pixel auf dem Aufzeichnungsmaterial nur Farbe annehmen kann oder nicht. Andererseits sind RT-Rasterverfahren bekannt, die für mehrstufige Druckverfahren geeignet sind, d.h. für Druckverfahren, die auf dem Aufzeichnungsmaterial eine kleine Anzahl von grob gestuften Druckwerten wiedergeben können. Ein solches Verfahren ist in der europäischen Patentschrift EP 0 598 104 beschrieben. Jeder Rasterpunkt besteht aus maximal 4 x 4 Device Pixeln, und jedes Device Pixel kann 8 verschiedene Druckwerte annehmen. Mit steigendem Wert auf der zu simulierenden feinstufigen Tonwertskala werden die Druckwerte in einem Device Pixel zunächst erhöht, bis eine minimale Tonwertstufe erreicht ist. Erst dann wird der Rasterpunkt um weitere Device Pixel vergrößert, um noch dunklere Stufen der Tonwertskala zu simulieren. Das Raster wird nur für einen Winkel von Null Grad beschrieben.

In der europäischen Patentanmeldung EP 0 740 459 A2 wird eine rationale Rasterung für ein Mehrstufen-Druckverfahren beschrieben, bei dem mehrere Sätze von Schwellwertmatrizen vorgesehen sind. Die Anzahl der Schwellwertmatrizen in jedem Satz ist gleich der Anzahl der verfügbaren Druckwertstufen. Die Sätze der Schwellwertmatrizen unterscheiden sich bezüglich der Veränderung der Rasterpunktform und der Druckwertstufen in einem Rasterpunkt mit zunehmenden Farbtonwerten der zu rasternden Bildpunkte. Für Bildpunkte in einem Bild wird ein Schwellwertsatz ausgewählt, der ausgeprägte isolierte Rasterpunkte erzeugt. Für Bildpunkte an einer scharfen Kante, z.B. am Rand einer Schrift, wird ein Schwellwertsatz ausgewählt, der schon bei kleineren und mittleren Farbtonwerten Rasterpunkte erzeugt, die ineinander übergehen. Dadurch wird erreicht, dass der Sägezahneffekt an scharfen Kanten reduziert wird. Mit einem Kantenfilter werden Bildbereiche in Bezug auf die Kantenschärfe unterschieden und ein geeigneter Satz von Schwellwertmatrizen für die Rasterung ausgewählt.

Aufgabe der vorliegenden Erfindung ist es, ein Rasterverfahren anzugeben, mit dem das in der deutschen Offenlegungsschrift DE 197 22 697 A1 beschriebene kombinierte IS/RT-Verfahren dahingehend verbessert und erweitert wird, daß es zur Erzeugung einer Mehrstufen-Rasterung geeignet ist. Die Erfindung gemäß Anspruch 1 erreicht dies dadurch, daß die Adressenberechnung des kombinierten IS/RT-Verfahrens auf mehrere Schwellwertmatrizen angewendet wird, die ausgelesenen Schwellwerte mit dem Farbtonwert des Bildsignals verglichen werden, und aus den Vergleichsergebnissen ermittelt wird, welcher der verfügbaren Druckwerte für das betreffende Device Pixel zu drucken ist. In einer alternativen Lösung gemäß Anspruch 2 wird die Adressenberechnung des kombinierten IS/RT-Verfahrens auf Druckwertmatrizen angewendet, die direkt die für jeden Farbtonwert des Bildes zu druckenden Druckwerte enthalten.

Der Stand der Technik und die Erfindung werden im folgenden anhand der Figuren 1 bis 7 näher erläutert.

Es zeigen:

Fig. 1 ein rationales Raster, das einem Ausschnitt von Device Pixeln überlagert ist,

Fig. 2 die zusätzliche Überlagerung eines irrationalen Rasters, das durch das rationale Raster angenähert werden soll,

Fig. 3 den Fehler zwischen dem rationalen und dem irrationalen Raster nach Betrag und Richtung in einem Ausschnitt von Fig. 2,

Fig. 4 ein Programmfragment zur Korrektur des Fehlers,

Fig. 5 ein Blockdiagramm für eine Ausführungsform der Erfindung,

Fig. 6 ein Blockdiagramm für eine modifizierte Ausführungsform der Erfindung, und

Fig. 7 ein Beispiel für die Verteilung von Druckwerten in einer Druckwertmatrix.

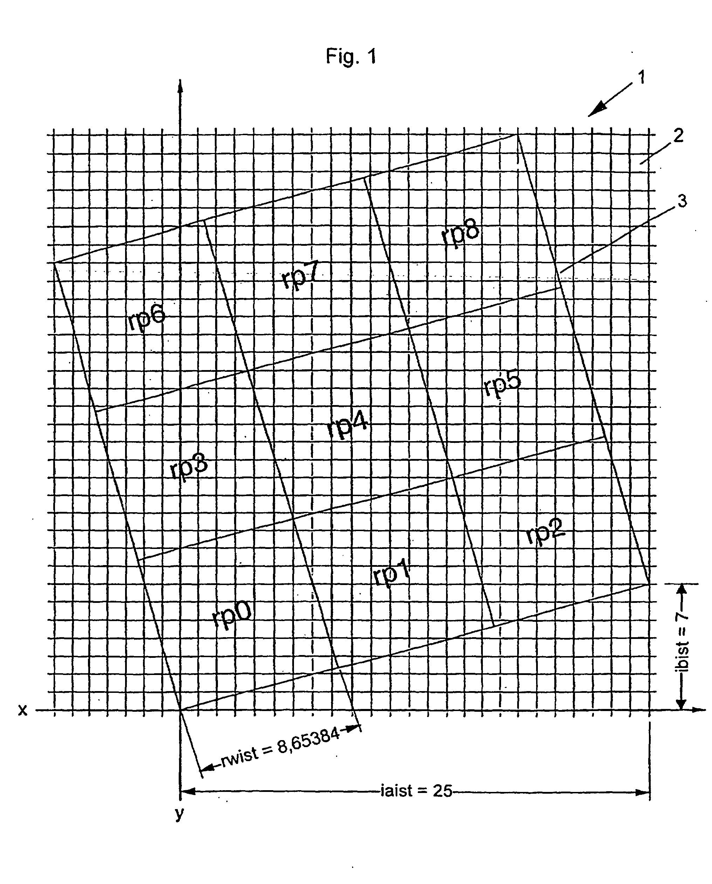

Zum besseren Verständnis der Erfindung wird zunächst noch einmal die Adressenberechnung des kombinierten IS/RT-Verfahrens aus der deutschen Offenlegungsschrift DE 197 22 697 A1 beschrieben. Fig. 1 zeigt einen Ausschnitt (1) von Device Pixeln (2) überlagert mit einem rationalen Raster (3) bestehend aus 3 x 3 Rasterpunkten bzw. Rasterpunktzellen, die mit rp0...rp8 bezeichnet sind. Zusätzlich sind die Koordinatenachsen x und y eines kartesischen Koordinatensystems eingezeichnet. Die Rasterpunktzellen rp0...rp8 werden wie "Kacheln" lückenlos in x- und y-Richtung wiederholt und überdecken damit die gesamte zu rasternde Fläche. Die Rasterpunktzellen rp0...rp8 haben eine Rasterweite rwist, und das rationale Raster (3) hat einen Winkel, dessen Tangens durch das Verhältnis der ganzen Zahlen ibist und iaist festgelegt ist, d.h. der Tangens des Rasterwinkels ist eine rationale Zahl.

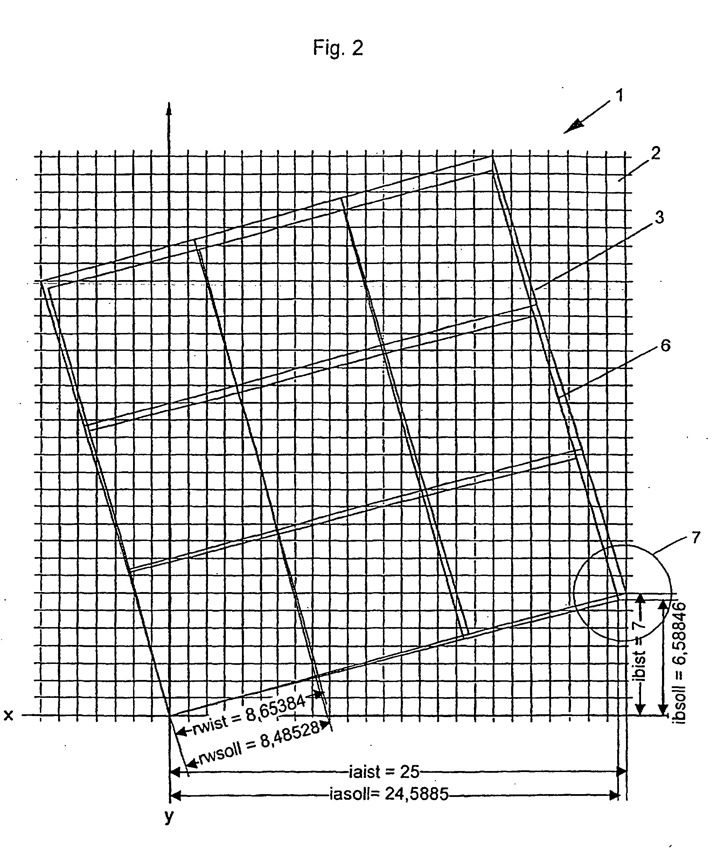

Fig. 2 zeigt zusätzlich ein irrationales Raster (6), das durch das rationale Raster (3) angenähert werden soll. Das irrationale Raster (6) hat eine etwas abweichende Rasterweite rwsoll und auch einen etwas abweichenden irrationalen Rasterwinkel, dessen Tangens durch das Verhältnis der nicht-ganzen Zahlen ibsoll und iasoll festgelegt ist.

Im folgenden wird die Adressenberechnung mit den Parametern aus den Figuren 1 und 2 näher erläutert. Es soll beispielsweise ein irrationales Raster (6), wie in Fig. 2 gezeigt, mit den Parametern

$$\text{Rasterweite rwsoll} = 8,485282 \text{ Device Pixel}$$

$$\text{Rasterwinkel } \alpha\text{soll} = 15 \text{ Grad} \tag{1}$$

erzeugt werden. Es wird angenommen, daß dieses Raster durch ein rationales Raster (3) mit rp X rp Rasterpunkten angenähert wird. Das rationale Raster wird durch die folgenden Parameter beschrieben:

$$\text{rp} = 3$$

$$\text{iaist} = 25$$

$$\text{ibist} = 7 \tag{2}$$

Durch geometrische Berechnung werden folgende Größen abgeleitet (sqrt = Quadratwurzel, atan = Arcus Tangens):

$$\text{Rasterweite rwist} = \text{sqrt (iaist}^2 + \text{ibist}^2\text{) / rp} = 8,653836 \text{ Device Pixel}$$

$$\text{Rasterwinkel } \alpha\text{ist} = \text{atan (ibist / iaist)} = 15,642246 \text{ Grad}$$

$$\text{iasoll} = \text{rp x rwsoll x cos (}\alpha\text{soll)} = 24,588461$$

$$\text{ibsoll} = \text{rp x rwsoll x sin (}\alpha\text{soll)} = 6,588457 \tag{3}$$

Aus den Größen iaist, ibist, iasoll, ibsoll werden der Betrag und die Richtung des Fehlers berechnet, der sich nach rwist $\times$ rp Device Pixeln unter dem Winkel $\alpha$ist ergibt:

$$\text{cerr} = \text{sqrt} (\text{da}^2 + \text{db}^2) = 0{,}582009 \text{ Device Pixel}$$

$$\alpha\text{err} = \text{atan} (\text{db} / \text{da}) = -135 \text{ Grad} \tag{4}$$

wobei gilt:

$$\text{da} = \text{iasoll - iaist}$$

$$\text{db} = \text{ibsoll - ibist} \tag{5}$$

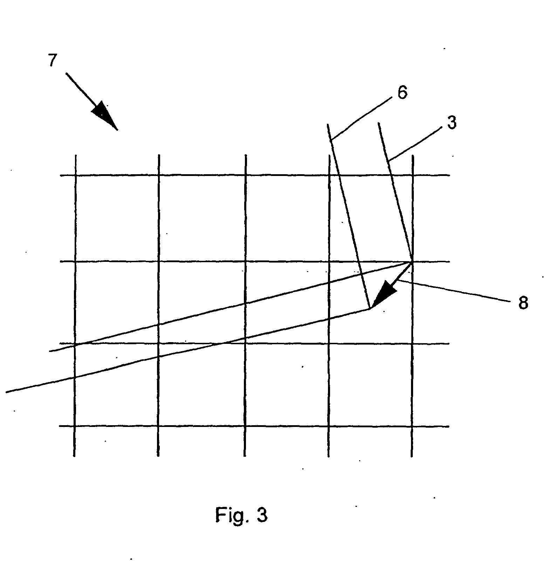

Fig. 3 zeigt den Fehler (8) nach Betrag und Richtung in dem vergrößerten Ausschnitt (7) von Fig. 2. Hieraus wird der Fehler pro Device Pixel bei der Rasterung entlang der x- und y-Achse bestimmt.

$$\text{dxa} = \text{cerr} \times \cos (\alpha\text{err} - \alpha\text{ist}) / (\text{rwist} \times \text{rp}) = -0{,}019539$$

$$\text{dxb} = \text{cerr} \times \sin (\alpha\text{err} - \alpha\text{ist}) / (\text{rwist} \times \text{rp}) = -0{,}010991$$

$$\text{dya} = \text{cerr} \times \cos (\alpha\text{err} - \alpha\text{ist} + 90) / (\text{rwist} \times \text{rp}) = 0{,}010991$$

$$\text{dyb} = \text{cerr} \times \sin (\alpha\text{err} - \alpha\text{ist} + 90) / (\text{rwist} \times \text{rp}) = -0{,}019539 \tag{6}$$

Die Werte dxa und dxb sind so zu verstehen, daß mit jedem Device Pixel, mit dem man sich in x-Richtung vom Koordinatenursprung entfernt, der Fehler zwischen Soll und Ist in x-Richtung um dxa Device Pixel und in y-Richtung um dxb Device Pixel wächst. Die Werte dya und dyb sind so zu verstehen, daß mit jedem Device Pixel, mit dem man sich in y-Richtung vom Koordinatenursprung entfernt, der Fehler zwischen Soll und Ist in x-Richtung um dya Device Pixel und in y-Richtung dyb Device Pixel wächst.
Für das Device Pixel an einer beliebigen Position x,y in der Fläche ergibt sich aus den Größen dxa, dxb, dya und dyb ein Fehler in der Reproduktion des geforderten Rasters von:

$$\text{Fehler in x-Richtung: erra} = y \times \text{dya} + x \times \text{dxa}$$

$$\text{Fehler in y-Richtung: errb} = y \times \text{dyb} + x \times \text{dxb} \tag{7}$$

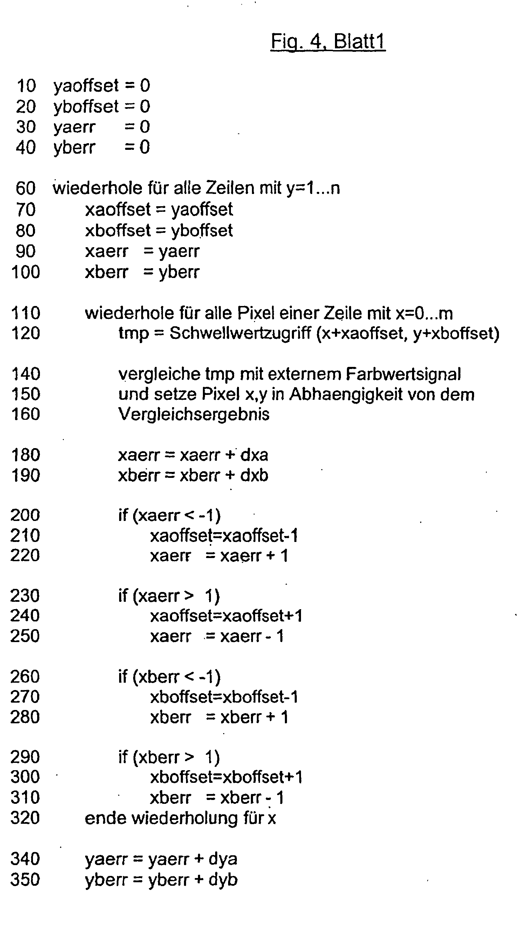

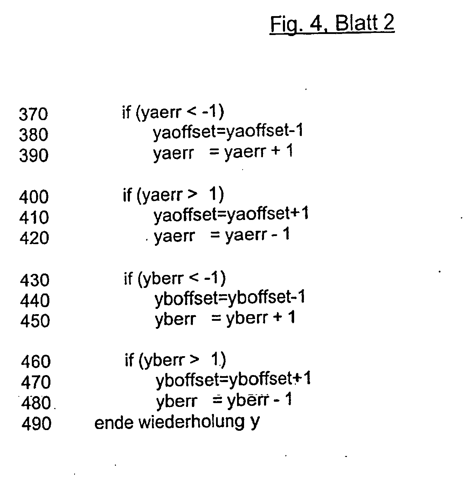

Nach dem kombinierten IS/RT-Verfahren der Offenlegungsschrift DE 197 22 697 A1 wird dieser Fehler laufend während der Rasterung korrigiert. Dies wird in einer einfachen Form mit dem Programmfragment in Fig. 4 erläutert. Normalerweise wird der Rastervorgang zeilenweise ausgeführt, d.h. zunächst werden alle Device Pixel für y=0 und x=0...m, dann für y=1 und x=0...m usw. gerastert. Folglich finden sich in den Programmzeilen 60...490 und 110...320 Schleifenkonstruktionen für x und y. In Programmzeile 120 wird mit den Schleifenzählern x und y und den noch zu erklärenden Zählern xaoffset und xboffset ein Schwellwertzugriff durchgeführt. Der so ermittelte Schwellwert wird in den Programmzeilen 140...160 mit einem extemen Farbtonwert des Bildsignals verglichen und in Abhängigkeit von diesem Vergleich das Device Pixel x,y geschwärzt oder nicht. In den Programmzeilen 180...190 wird in den Zählern xaerr und xberr der Fehler für jeden x-Schleifendurchlauf aufaddiert. Analoges geschieht in den Zeilen 340...350 für jeden y-Schleifendurchlauf. Wird der in xaerr und xberr aufaddierte Fehler betragsmäßig größer als 1 Pixel, so wird der Fehler in den Programmzeilen 200...310 korrigiert. Wenn z.B. xaerr kleiner als -1 wird, so wird von xaoffset 1 subtrahiert. Nehmen wir an, daß xaoffset vorher gleich 0 war, so wird bei allen weiteren x-Schleifendurchläufen bei den Schwellwertzugriffen in Programmzeile 120 nicht mehr auf den Schwellwert für x sondern auf den für x-1 zugegriffen. Hierdurch wird die eigentliche Korrektur durchgeführt. In weiteren sukzessiven x-Schleifendurchläufen wird xaoffset zu -2, -3, usw. und bei den Schwellwertzugriffen als Korrektur berücksichtigt. Analoges geschieht in den Programmzeilen 370...480 für jeden y-Schleifendurchlauf. In den Programmzeilen 70...100 werden vor jedem x-Schleifendurchlauf deren Zähler mit den bereits in der y-Schleife vorgegebenen Fehler- und Korrekturwerten initialisiert. Analog hierzu werden in den Programmzeilen 10...40 die gleichen Zähler vor dem ersten y-Schleifendurchgang zu 0 initialisiert. Für weitere Verfeinerungen des Berechnungsverfahrens für die Adressen der Schwellwertmatrix wird auf die Offenlegungsschrift DE 197 22 697 A1 verwiesen.

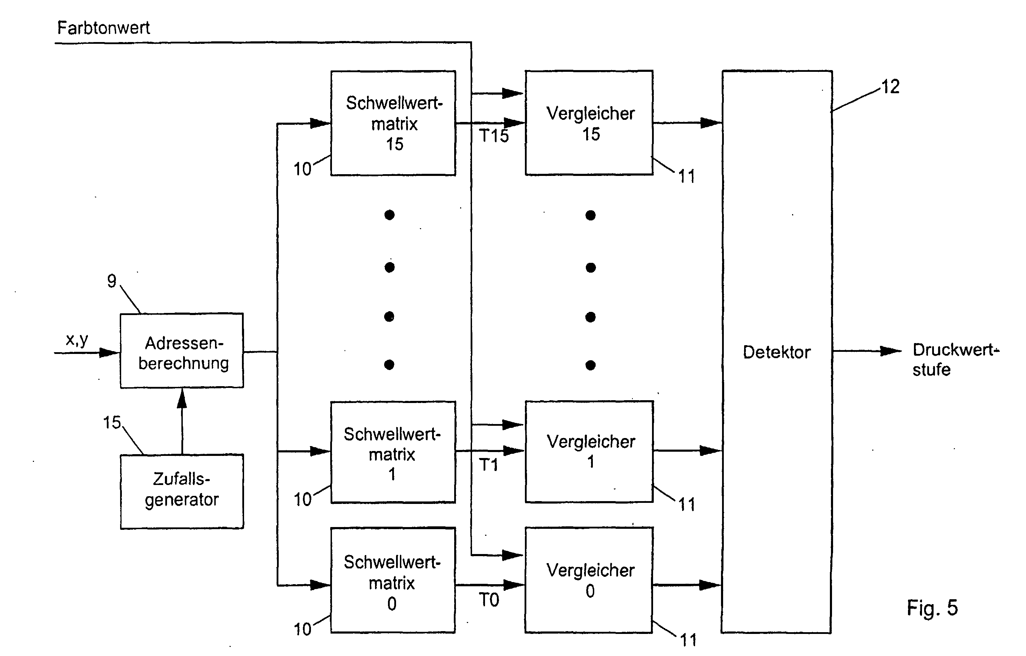

Fig. 5 zeigt ein Blockdiagramm für eine Ausführungsform der Erfindung. Die x,y-Koordinaten des zu bearbeitenden Device Pixels werden der Adressenberechnung (9) zugeführt, mit der die Schwellwertmatrixadressen nach dem oben erläuterten kombinierten IS/RT-Verfahren berechnet werden, d.h. durch die fortlaufende Adressfehlerkorrektur wird aus einem vorgegebenen rationalen Raster ein irrationales Raster erzeugt. Die berechnete Schwellwertmatrixadresse wird mehreren Schwellwertmatrizen (10) zugeführt, wobei die Zahl der Schwellwertmatrizen gleich der Zahl der zur Verfügung stehenden Druckwerte ist. Im Beispiel von Fig. 5 sind 16 Schwellwertmatrizen angenommen worden, d.h. der Druckprozeß kann in jedem Device Pixel 16 verschiedene Druckwerte wiedergeben. Die aus den Schwellwertmatrizen (10) ausgelesenen Schwellwerte T0....T15 werden zusammen mit dem für das Device Pixel gültigen Farbtonwert des zu rasternden Bildsignals an jeweils einen Vergleicher (11) angelegt, der entscheidet, ob der jeweilige Schwellwert kleiner oder größer als der Farbtonwert des Bildsignals ist. Diese 16 binären Entscheidungen werden in dem Detektor (12) ausgewertet, um einen der möglichen 16 Druckwerte für das Device Pixel auszuwählen.

Mit einer geeigneten Verteilung von Schwellwerten in den Schwellwertmatrizen (10) kann erreicht werden, daß die ausgelesenen Schwellwerte T0....T15 in jedem Fall monoton wachsend sind. Dann liefern beispielsweise alle Vergleicher (11), bei denen der Schwellwert Tx kleiner als der Farbtonwert des Bildsignals ist, die binäre Entscheidung 1, und die übrigen Vergleicher liefern die binäre Entscheidung 0. In dem Fall wird vom Detektor (12) der Vergleicher ermittelt, bis zu dem der Schwellwert Tx gerade noch kleiner als der Farbtonwert des Bildsignals ist, und als Druckwert wird die Nummer dieses Vergleichers (11) ausgegeben.

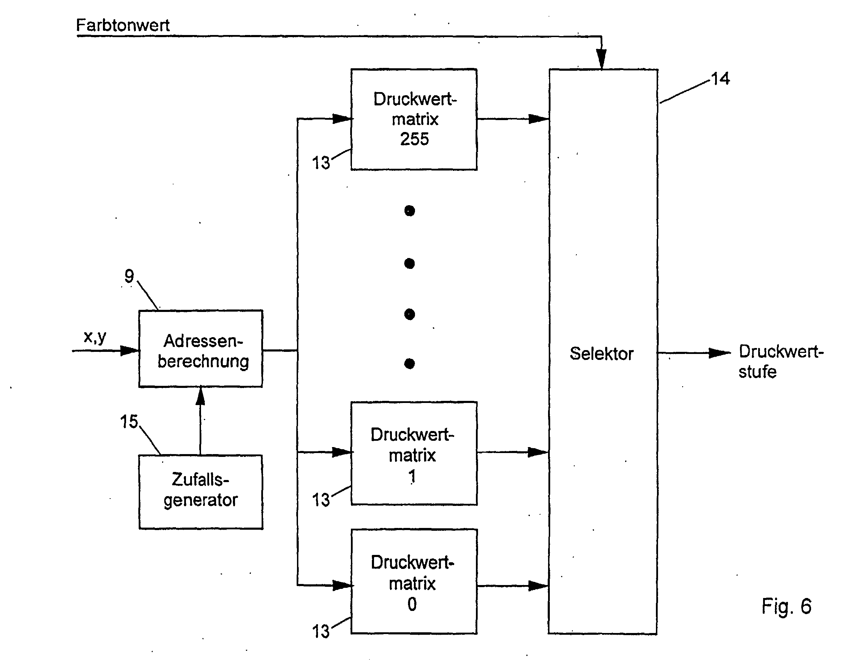

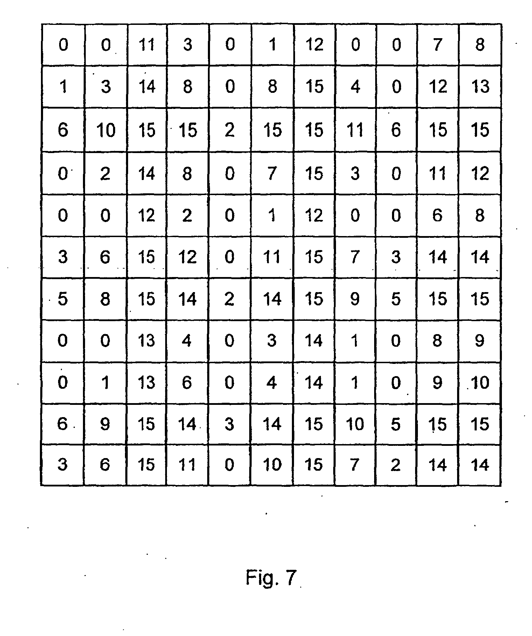

Fig. 6 zeigt ein Blockdiagramm für eine modifizierte Ausführungsform der Erfindung. Die x,y-Koordinaten des zu bearbeitenden Device Pixels werden der Adressenberechnung (9) zugeführt, mit der die Adressen nach dem oben erläuterten kombinierten IS/RT-Verfahren berechnet werden. Die berechneten Adressen werden jedoch mehreren Druckwertmatrizen (13) zugeführt, wobei die Zahl der Druckwertmatrizen gleich der Zahl der Tonwertstufen ist, die mit der Rasterung simuliert werden sollen. Im Beispiel von Fig. 6 sind 256 Druckwertmatrizen (13) angenommen worden, d.h. der Druckprozeß soll mit Hilfe der Rasterung 256 verschiedene Tonwertstufen wiedergeben. In jeder der Druckwertmatrizen (13) ist eine Verteilung der 16 zur Verfügung stehenden Druckwerte gespeichert, mit der die jeweilige Tonwertstufe simuliert wird, wobei das Auge die Verteilung der Druckwerte über mehrere benachbarte Device Pixel integriert. Die aus den Druckwertmatrizen (13) ausgelesenen Druckwerte werden einem Selektor (14) zugeführt, der vom Farbtonwert des Bildsignals so gesteuert wird, daß die Druckwertmatrix (13) zum Ausgang durchgeschaltet wird, deren simulierte Tonwertstufe dem Farbtonwert entspricht. Fig. 7 zeigt ein Beispiel für die Verteilung der Druckwerte in einer Druckwertmatrix (13), mit der die Tonwertstufe 127 simuliert wird.

Zur Verminderung von störenden Reststrukturen, die in dem erzeugten Raster aufgrund von Unzulänglichkeiten des Aufzeichnungsprozesses oder des Druckwerks entstehen können, kann das erfindungsgemäße Verfahren noch um eine Einheit zur Erzeugung eines Adressenrauschens erweitert werden. Diese Erweiterung ist in beiden beschriebenen Ausführungsformen nach Fig. 5 und Fig. 6 möglich. Dazu ist ein Zufallsgenerator (15) vorgesehen, der in einem in der Regel kleinen Zahlenbereich zwischen -zmax und +zmax Zufallszahlen z erzeugt.

Nach einem ersten Verfahren des Adressenrauschens werden die Zufallszahlen auf die x- und y-Komponenten der berechneten Adressen für die Schwellwertmatrizen (10) bzw. die Druckwertmatrizen (13) aufaddiert. Zweckmäßigerweise werden die Zufallszahlen nur jeweils nach einer bestimmten Anzahl von k Adreßschritten in x- bzw. y-Richtung addiert. Um zu verhindern, daß sich die Zufallswerte akkumulieren, d.h. um sicherzustellen, daß die Zufallsabweichungen der Adressenkomponenten nicht über den Bereich zwischen - zmax und +zmax hinausgehen, ist es zweckmäßig, vor dem Addieren einer neuen Zufallszahl z_neu jeweils die zuvor addierte Zufallszahl z_alt wieder abzuziehen. Die berechneten Adressenkomponenten x_ber und y_ber werden somit nach jeweils k Adreßschritten in x- bzw. y-Richtung folgendermaßen durch die Zufallszahlen modifiziert:

$$x\_neu = x\_ber + zx\_neu - zx\_alt$$

$$y\_neu = y\_ber + zy\_neu - zy\_alt \tag{8}$$

Eine genaue Analyse der Adressenberechnung nach dem kombinierten IS/RT-Verfahren zeigt, daß die Korrektur des Adressenfehlers zwischen dem rationalen Raster und dem irrationalen Raster jeweils nach einer festen Anzahl von Adreßschritten in x- bzw. y-Richtung vorgenommen wird (vgl. Offenlegungsschrift DE 197 22 697 A1). Das kann zu einem zweiten Verfahren des Adressenrauschens genutzt werden, das die Besonderheiten der Adressenberechnung nach dem IS/RT-Verfahren berücksichtigt. Wenn beispielsweise die Korrektur zwischen dem rationalen Raster und dem irrationalen Raster regulär nach sx_ber Adreßschritten in x-Richtung und nach sy_ber Adreßschritten in y-Richtung erfolgen soll, werden diese Werte durch die Zufallszahlen variiert. Dabei wird wieder durch das Abziehen der zuvor addierten Zufallszahl verhindert, daß sich die Zufallswerte akkumulieren. Die Korrektur zwischen dem rationalen Raster und dem irrationalen Raster erfolgt dann nach den neuen zufällig variierten Anzahlen sx_neu bzw. sy_neu von Adreßschritten.

$$sx\_neu = sx\_ber + zx\_neu - zx\_alt$$

$$sy\_neu = sy\_ber + zy\_neu - zy\_alt \tag{9}$$

Der Unterschied zu dem ersten Verfahren des Adressenrauschens ist, daß die Zufallszahlen nicht direkt auf die Adressenkomponenten aufaddiert werden, sondern daß die Orte in der x,y-Ebene, an denen die Korrektur des Adressenfehlers zwischen dem rationalen Raster und dem irrationalen Raster vorgenommen wird, zufällig variiert werden.

**Patentansprüche**

1. Verfahren zur digitalen Rasterung eines Halbtonbildes mit einer beliebigen gewünschten Rasterweite (rwsoll) und einem beliebigen gewünschten Rasterwinkel (αsoll) eines ersten Rasters (6) durch Auslesen von gespeicherten Schwellwerten und Vergleichen mit den Farbtonwerten des Halbtonbildes, wobei

   - dem ersten Raster (6) ein erstes Koordinatensystem mit x,y-Adressen zugeordnet ist,
   - die Schwellwerte die eines zweiten gegebenen Rasters (3) mit einer gegebenen Rasterweite (rwist) und einem gegebenen Rasterwinkel (αist) sind, dem ein zweites Koordinatensystem mit x,y-Adressen zugeordnet ist,
   - während des Auslesens der Schwellwerte ein Fehler zwischen den x,y-Adressen des ersten und des zweiten Koordinatensystems ermittelt wird, und
   - der Fehler durch eine Korrektur der x,y-Adresse des zweiten Koordinatensystems zum Auslesen der Schwellwerte kompensiert wird, sobald der Fehler einen vorgegebenen Grenzwert überschreitet, **dadurch gekennzeichnet, dass**

      (a) die Schwellwerte des zweiten gegebenen Rasters (3) in mehreren Schwellwertmatrizen (10) gespeichert sind,
      (b) die Zahl der Schwellwertmatrizen gleich der Zahl der zur Verfügung stehenden Druckwerte eines mehrstufigen Druckverfahrens ist,
      (c) der aus jeder Schwellwertmatrix (10) an der gegebenenfalls kompensierten x,y-Adresse im zweiten Koordinatensystem ausgelesene Schwellwert (T0...T15) für ein druckbares Device Pixel (2) mit dem diesem zugehörigen Farbtonwert des Halbtonbildes verglichen wird (11), und
      (d) beruhend auf den Vergleichsergebnissen einer der in dem mehrstufigen Druckverfahren zur Verfügung stehenden Druckwerte für das Device Pixel ausgewählt wird (12).

2. Verfahren zur digitalen Rasterung eines Halbtonbildes mit einer beliebigen gewünschten Rasterweite (rwsoll) und einem beliebigen gewünschten Rasterwinkel (αsoll) eines ersten Rasters (6) durch Auslesen von gespeicherten Druckwerten, wobei

   - dem ersten Raster (6) ein erstes Koordinatensystem mit x,y-Adressen zugeordnet ist,
   - die Druckwerte einen oder mehrere Rasterpunkte eines zweiten gegebenen Rasters (3) mit einer gegebenen Rasterweite (rwist) und einem gegebenen Rasterwinkel (αist) repräsentieren, dem ein zweites Koordinatensystem mit x,y-Adressen zugeordnet ist,
   - während des Auslesens der Druckwerte ein Fehler zwischen den x,y-Adressen des ersten und des zweiten Koordinatensystems ermittelt wird, und
   - der Fehler durch eine Korrektur der x,y-Adresse des zweiten Koordinatensystems zum Auslesen der Druckwerte kompensiert wird, sobald der Fehler einen vorgegebenen Grenzwert überschreitet, **dadurch gekennzeichnet, dass**

      (a) die Druckwerte des zweiten gegebenen Rasters (3) in mehreren Druckwertmatrizen (13) gespeichert sind,
      (b) für jede mögliche Tonwertstufe der Farbtonwerte eine zugeordnete Druckwertmatrix (13) vorhanden ist,
      (c) die in jeder der Druckwertmatrizen (13) gespeicherten Druckwerte druckbare Werte eines mehrstufigen Druckverfahrens für die den Bildpunkten des zu rasternden Halbtonbildes zugeordneten Device Pixel (2) sind,

(d) für einen Bildpunkt jede der Druckwertmatrizen mit der gegebenenfalls kompensierten x,y-Adresse im zweiten Koordinatensystem adressierbar ist und daraufhin aus jeder der Druckwertmatrizen ein Druckwert für das dem Bildpunkt zugeordnete Device Pixel auslesbar ist, und

(e) für die Rasterung des dem Bildpunkt zugehörigen Farbtonwertes der ausgelesene Druckwert derjenigen Druckwertmatrix ausgewählt wird (14), deren Tonwertstufe dem Farbtonwert entspricht.

**3.** Verfahren nach Anspruch 1 oder 2, **dadurch gekennzeichnet, daß** die korrigierten x,y-Adressen des zweiten Koordinatensystems durch Zufallszahlen modifiziert werden.

**4.** Verfahren nach Anspruch 3, **dadurch gekennzeichnet, daß** die Zufallszahlen und die x,y-Adressen addiert werden.

**5.** Verfahren nach Anspruch 3, **dadurch gekennzeichnet, daß** die Orte im zweiten Koordinatensystem, an denen die x,y-Adresse korrigiert wird, durch die Zufallszahlen variiert werden.

**6.** Verfahren nach einem der Ansprüche 3 bis 5, **dadurch gekennzeichnet, daß** vor der Anwendung einer neuen Zufallszahl der Einfluss der vorhergehenden Zufallszahl rückgängig gemacht wird.

**Claims**

**1.** Method for digital screening of a halftone image with any desired screen width (rwsoll) and any desired screen angle ($\alpha$soll) of a first screen (6) by read-out of stored threshold values and comparison with the chromaticity values of the halftone image, wherein

- a first system of coordinates with x,y addresses is assigned to the first screen (6),
- the threshold values are those of a second given screen (3) with a given screen width (rwist) and a given screen angle ($\alpha$ist) to which a second system of coordinates with x,y addresses is assigned,
- an error between the x,y addresses of the first and second systems of coordinates is detected during read-out of the threshold values, and
- the error is compensated by a correction of the x,y address of the second system of coordinates for read-out of the threshold values once the error exceeds a specified limit,

**characterized in that**

(a) the threshold values of the second given screen (3) are stored in a number of threshold value matrixes (10),

(b) the number of threshold value matrixes is equal to the number of available print values of a multistage printing process,

(c) the threshold value (T0...T15) read out from each threshold value matrix (10) at the x,y address (compensated if need be) in the second system of coordinates for a printable device pixel (2) is compared (11) with the halftone image chromaticity value belonging to that device pixel, and

(d) on the basis of the results of the comparison, one of the print values available in the multistage printing process is selected (12) for the device pixel.

**2.** Method for digital screening of a halftone image with any desired screen width (rwsoll) and any desired screen angle ($\alpha$soll) of a first screen (6) by read-out of stored print values, wherein

- a first system of coordinates with x,y addresses is assigned to the first screen (6),
- the print values represent one or more screen dots of a second given screen (3) with a given screen width (rwist) and a given screen angle ($\alpha$ist) to which a second system of coordinates with x,y addresses is assigned,
- an error between the x,y addresses of the first and second systems of coordinates is detected during read-out of the print values, and
- the error is compensated by a correction of the x,y address of the second system of coordinates for read-out of the print values once the error exceeds a specified limit,

**characterized in that**

(a) the print values of the second given screen (3) are stored in a number of print value matrixes (13),
(b) an assigned print value matrix (13) exists for every possible tonal value gradation of the chromaticity values,
(c) the print values stored in each of the print value matrixes (13) are printable values of a multistage printing process for the device pixels (2) assigned to the image dots of the halftone image to be screened,
(d) for an image dot, each of the print value matrixes can be addressed with the x,y address (compensated if need be) in the second system of coordinates, whereupon a print value for the device pixel assigned to the image dot can be read out from each of the print value matrixes, and
(e) the print value read out from the print value matrix whose tonal value gradation corresponds to the chromaticity value is selected (14) for the screening of the chromaticity value belonging to the image dot.

3. Method according to Claim 1 or Claim 2, **characterized in that** the corrected x,y addresses of the second system of coordinates are modified by random numbers.

4. Method according to Claim 3, **characterized in that** the random numbers and the x,y addresses are added together.

5. Method according to Claim 3, **characterized in that** the locations in the second system of coordinates at which the x,y address is corrected are varied by the random numbers.

6. Method according to any one of Claims 3 to 5, **characterized in that** before a new random number is used the effect of the preceding random number is undone.

**Revendications**

1. Procédé de tramage numérique d'une image en demi-tons comprenant un lignage de trame souhaité particulier (rwsoll) et un angle de trame souhaité particulier ($\alpha$soll) d'une première trame (6) par une lecture de valeurs de seuil mémorisées et une comparaison avec les valeurs de teintes de l'image en demi-tons,
dans lequel

-    un premier système de coordonnées avec des adresses x, y est associé à la première trame (6),
-    les valeurs de seuil sont celles d'une seconde trame donnée (3), comprenant un lignage de trame donné (rwist) et un angle de trame donné ($\alpha$ist), à laquelle est associé un second système de coordonnées avec des adresses x, y,
-    on détermine, pendant la lecture des valeurs de seuil, une erreur entre les adresses x, y du premier et du second système de coordonnées, et
-    on compense l'erreur par une correction des adresses x, y du second système de coordonnées destiné à lire les valeurs de seuil, dès que l'erreur dépasse une valeur limite prédéterminée,

**caractérisé en ce que**

(a) les valeurs de seuil de la seconde trame donnée (3) sont enregistrées dans plusieurs matrices de valeurs de seuil (10),
(b) le nombre de matrices de valeurs de seuil est égal au nombre de valeurs d'impression disponibles dans un procédé d'impression étagé,
(c) la valeur de seuil (T0... T15) pour un pixel de dispositif (2) imprimable, lue dans le second système de coordonnées à partir de chaque matrice de valeurs de seuil (10) des adresses x, y compensées le cas échéant, est comparée à la valeur de teintes de l'image en demi-tons (11) appartenant à ce dispositif, et
(d) en fonction des résultats de comparaison, on choisit une des valeurs d'impression disponibles dans le procédé d'impression étagé pour le pixel de dispositif (12).

2. Procédé de tramage numérique d'une image en demi-tons comprenant un lignage de trame souhaité particulier (rwsoll) et un angle de trame souhaité particulier ($\alpha$soll) d'une première trame (6) par une lecture de valeurs d'impression mémorisées,
dans lequel

-    un premier système de coordonnées avec des adresses x, y est associé à la première trame (6),
-    les valeurs d'impression représentent un ou plusieurs point(s) de trame d'une seconde trame donnée (3), comprenant un lignage de trame donné (rwist) et un angle de trame donné ($\alpha$ist), à laquelle est associé un second système de coordonnées avec des adresses x, y,

- on détermine, pendant la lecture des valeurs d'impression, une erreur entre les adresses x, y du premier et du second système de coordonnées, et
- on compense l'erreur par une correction des adresses x, y du second système de coordonnées destiné à lire les valeurs d'impression, dès que l'erreur dépasse une valeur limite prédéterminée,

**caractérisé en ce que**

(a) les valeurs d'impression de la seconde trame donnée (3) sont enregistrées dans plusieurs matrices de valeurs d'impression (13),

(b) une matrice de valeurs d'impression (13) associée est présente pour chaque échelon des valeurs de teintes possibles,

(c) les valeurs d'impression enregistrées dans chacune des matrices de valeurs d'impression (13) sont des valeurs imprimables d'un procédé d'impression étagé pour le pixel de dispositif (2) associé aux points d'image de l'image en demi-tons à tramer,

(d) pour un point d'image, chacune des matrices de valeurs d'impression peut être adressée avec l'adresse x, y compensée le cas échéant dans le second système de coordonnées et à partir de chacune des matrices de valeurs d'impression, une valeur d'impression peut alors être lue pour le pixel de dispositif associé au point d'image, et

(e) pour le tramage de la valeur de teintes associée au point d'image, on choisit la valeur d'impression lue de chaque matrice de valeurs d'impression (14) dont l'échelon de valeur de teintes correspond à la valeur de teintes.

3. Procédé selon la revendication 1 ou 2,
**caractérisé en ce que**
les adresses x, y corrigées du second système de coordonnées sont modifiées par des nombres aléatoires.

4. Procédé selon la revendication 3,
**caractérisé en ce que**
on additionne les nombres aléatoires et les adresses x, y.

5. Procédé selon la revendication 3,
**caractérisé en ce que**
les emplacements dans le second système de coordonnées, dans lequel les adresses x, y sont corrigées, peuvent varier en fonction des nombres aléatoires.

6. Procédé selon l'une des revendications 3 à 5,
**caractérisé en ce que**
avant d'utiliser un nouveau nombre aléatoire, l'influence du nombre aléatoire antérieur est annulée.

## Fig. 1

Fig. 2

Fig. 3

## Fig. 4, Blatt1

```
yaoffset = 0
yboffset = 0
yaerr    = 0
yberr    = 0

wiederhole für alle Zeilen mit y=1...n
      xaoffset = yaoffset
      xboffset = yboffset
      xaerr  = yaerr
      xberr  = yberr

      wiederhole für alle Pixel einer Zeile mit x=0...m
            tmp = Schwellwertzugriff (x+xaoffset, y+xboffset)

            vergleiche tmp mit externem Farbwertsignal
            und setze Pixel x,y in Abhaengigkeit von dem
            Vergleichsergebnis

            xaerr = xaerr + dxa
            xberr = xberr + dxb

            if (xaerr < -1)
                xaoffset=xaoffset-1
                xaerr  = xaerr + 1

            if (xaerr >  1)
                xaoffset=xaoffset+1
                xaerr  = xaerr - 1

            if (xberr < -1)
                xboffset=xboffset-1
                xberr  = xberr + 1

            if (xberr >  1)
                xboffset=xboffset+1
                xberr  = xberr - 1
      ende wiederholung für x

      yaerr = yaerr + dya
      yberr = yberr + dyb
```

## Fig. 4, Blatt 2

```
if (yaerr < -1)
    yaoffset=yaoffset-1
    yaerr  = yaerr + 1

if (yaerr >  1)
    yaoffset=yaoffset+1
    yaerr  = yaerr - 1

if (yberr < -1)
    yboffset=yboffset-1
    yberr  = yberr + 1

if (yberr >  1)
    yboffset=yboffset+1
    yberr  = yberr - 1
ende wiederholung y
```

Fig. 5

Farbtonwert

Adressenberechnung

Zufallsgenerator

Schwellwertmatrix
15

Schwellwertmatrix
1

Schwellwertmatrix
0

Vergleicher
15

Vergleicher
1

Vergleicher
0

Detektor

Druckwertstufe

T15

T1

T0

x,y

9

15

10

10

10

11

11

11

12

EP 1 285 528 B1

16

Fig. 6

EP 1 285 528 B1

| 0 | 0 | 11 | 3 | 0 | 1 | 12 | 0 | 0 | 7 | 8 |
|---|---|----|---|---|----|----|----|---|----|----|
| 1 | 3 | 14 | 8 | 0 | 8 | 15 | 4 | 0 | 12 | 13 |
| 6 | 10 | 15 | 15 | 2 | 15 | 15 | 11 | 6 | 15 | 15 |
| 0 | 2 | 14 | 8 | 0 | 7 | 15 | 3 | 0 | 11 | 12 |
| 0 | 0 | 12 | 2 | 0 | 1 | 12 | 0 | 0 | 6 | 8 |
| 3 | 6 | 15 | 12 | 0 | 11 | 15 | 7 | 3 | 14 | 14 |
| 5 | 8 | 15 | 14 | 2 | 14 | 15 | 9 | 5 | 15 | 15 |
| 0 | 0 | 13 | 4 | 0 | 3 | 14 | 1 | 0 | 8 | 9 |
| 0 | 1 | 13 | 6 | 0 | 4 | 14 | 1 | 0 | 9 | 10 |
| 6 | 9 | 15 | 14 | 3 | 14 | 15 | 10 | 5 | 15 | 15 |
| 3 | 6 | 15 | 11 | 0 | 10 | 15 | 7 | 2 | 14 | 14 |

Fig. 7